# EUROPEAN PATENT SPECIFICATION

(11) **EP 3 768 131 B1**
(45) Date of publication and mention of the grant of the patent: **25.01.2023**
(21) Application number: 19713566.8
(22) Date of filing: 20.02.2019
(51) Int. Cl.: A47J 37/04

(54) **EQUIPMENT FOR GRILLING FOOD**
AUSRÜSTUNG ZUM GRILLEN VON LEBENSMITTELN
ÉQUIPEMENT POUR GRILLER DES ALIMENTS

(30) Priority: 01.02.2019 IT 201900001479
(43) Date of publication of application: 27.01.2021
(73) Proprietor: Modul Grill Srl, 35043 Monselice (IT)
(72) Inventor: REGAZZON, Alessandro, 35043 Monselice (IT)
(74) Representative: Vinci, Marcello
(86) International application number: PCT/IB2019/051364
(87) International publication number: WO 2020/157546

(56) References cited:
- FR-A1- 2 844 983
- IT-A1- TV20 100 044
- US-A1- 2014 345 593

## Description

The present patent concerns pieces of equipment used for grilling various types of meat, vegetables, cheeses, etc.

At present different types of grills in various shapes and sizes are known, more specifically very large grills are known, which are used for recreational and collective activities, for example on the occasion of fairs or village festivals, where it is necessary to grill large quantities of food of different types and sizes, such as: polenta, suckling pigs, meat, whole chickens, vegetables.

Said known large grills do not include devices for turning the meat, so that it is necessary to turn each single piece with a fork or another suitable tool.

When using those grills, cooks are forced to stand in close proximity to the heat source, even for a long time, with consequent overheating, burns and scalds due to the heat produced by the flames and/or the embers and the boiling oil that can also be sprayed outwards.

In addition to the risk of burns, it is also necessary to consider the hygienic aspect, since the persons around the grill sweat due to the strong heat generated by the fire and the embers, and the sweat may also come into contact with the food being grilled. Furthermore, the cook, in order to turn the meat, tries to stand as far from the edge of the grill as possible, with consequent operating difficulties.

The known grills force the cooks to remain constantly alert, since they need to check the degree of cooking of each single piece being grilled, in order to evaluate its degree of cooking and thus decide whether it must be turned or not.

An equipment for grilling according to the preamble of claim 1 is known from ITTV20100044A1.

In order to overcome all the drawbacks described above, a new piece of equipment for grilling various types of food, such as meat, vegetables, polenta, etc. has been designed and carried out.

Said piece of equipment comprises, among its main parts, a grate-holding frame suited to rotate by 180° preferably on its center axis, in order to allow both sides of the piece of meat or food in general to be grilled alternately.

More specifically, the invention comprises a new grate-holding frame moved by at least two distinct motors having two different and distinct functions.

A first motor is designed to translate the grate-holding frame on the vertical plane, from bottom to top and vice versa, starting from a lower horizontal position located at a convenient distance for grilling the products in the best possible way.

A second motor is designed to make the grate-holding frame rotate on itself, in such a way as to allow the food to be cooked on both sides.

Thus, said first motor will serve to translate the grate-holding frame first upwards and then downwards, in such a way that in the position corresponding to the maximum height the grate-holding frame can be rotated by 180° on its center axis, thus inverting the side of the food facing downwards.

Said 180° rotation of the grate-holding frame on its axis is obtained by means of said second motor, which is made integral with the translating device that supports the grate-holding frame, in such a way that said second motor translates from a lower position to an upper position together with the grate-holding frame.

After the rotation of the grate-holding frame, the first motor will provide for translating the latter downwards, so that said overturned grate-holding frame returns to the ideal grilling position.

Said second motor can also serve the function of rotating the grate-holding frame with a continuous motion.

It is also possible to replace the grate-holding frame with a horizontal rod or rotisserie spit to be applied to the equipment, in such a way as to be able to grill whole animals (chickens, pigs, etc.), thanks to the second motor that is suited to make said spit rotate with a continuous motion.

In place of the grate-holding frame, it is also possible to insert a series of spits that are set rotating on their axis by means of said second motor, wherein suckling pigs or bigger animals are put on said spits.

Said equipment for grilling meat and other products furthermore comprises an electric and electronic control system equipped with at least one timer and some position sensors, so that it is possible to set the cooking time, the number of rotations, the position of the grate-holding frame with respect to the plane on which the embers lie, and wherein said position can be changed according to the quantity of heat, the temperature, the type of product to be grilled.

According to the invention, the timer can thus be set on a grilling time of just a few minutes or on much longer grilling times, which are necessary, for example, when grilling chickens.

Said control device, therefore, can include several cooking programs, according to the heat source and to the products to be grilled.

The piece of equipment can conveniently comprise also a remote control, or any other wireless control device, so that all the operations, including the start of the two motors, can be preset and controlled from a distance of a few meters, which makes the work of the persons in charge less demanding.

The equipment comprises a grate-holding frame that rotates on its center axis thanks to said second motor, and wherein said grate-holding frame is divided in several zones designed to support pairs of grates, each made up of two grates or grids hinged to each other.

Each of said pair of grates is constrained to said grate-holding frame rotated by said second motor, wherein several zones designed to support said pairs of grates are defined in said frame.

Each of said pairs of grates described above comprises a first grate, or first grid, and a second grate hinged to said first grid, in such a way that said second grate hinged to said first grate can be opened and spaced from the latter in order to be able to hold in position food products having also different thicknesses.

The connection hinges between said second grates and said first grate may allow the rotation axis to be changed, so that the grates are rotated in several, more or less spaced positions, according to the size of the food product being cooked.

As a consequence of the above, it will be necessary to approach the grate-holding frame exclusively in order to extract the pairs of grates or to insert or extract the food in/from the first row of double grates, wherein said operation can be carried out with the grate-holding frame in a position in which it is partially lifted and partially rotated with respect to the grilling position, which is less demanding for the cook.

At the end of the grilling process, one or more pairs of grates are extracted in order to move the food away from the heat source or it is possible to open all or some of the second upper grates in order to extract the food contained therein. Successively, it will be possible to introduce other food and to start a new grilling cycle. Furthermore, the grate-holding frame can be replaced with a rotisserie spit or multiple spit in order to roast the food by making it rotate continuously, without interruptions, by means of the second motor.

The equipment for grilling food can comprise a heat source consisting of one or more plates with gas burners located under them, wherein said gas burners can be adjusted by means of a control unit that is described below.

Said gas plates can be fed with methane gas or any other suitable gas.

Said gas plates guarantee increased safety, as there are no sparks produced by the embers, and they also ensure more control over the heat source, since it is possible to vary the intensity of the flame in different positions of the grill.

Alternatively, said equipment for grilling food can use embers contained in an underlying steel drawer as a heat source.

Said drawer containing the embers will be positioned exactly under the grate-holding frame, so that it is in a suitable position for correctly grilling the food.

Said embers must be distributed homogeneously inside the drawer, in such a way that the heat is evenly distributed over the entire surface of the grill.

Said equipment for grilling food furthermore comprises side and rear safety shields, suited also to prevent the ejection of sparks from the drawer containing the embers and protect the embers themselves in case of wind.

The rotary grill's moving device will preferably be of the type with chain, wherein the chains are protected by suitable casings.

Said grilling equipment may also comprise a front door suited to close also the front part of the grill, meaning the part where the person who places the food on the grill works.

Said front door can be constituted by two front panels or doors, which will be coupled with the right and left sides of the structure.

Said equipment for grilling food may also comprise wheels located at the base and intended to allow the grill to be moved more easily.

The invention includes also a control unit for the new device.

Said control unit will manage all the grilling operations, such as the translation and rotation of the grill, the adjustment of the gas burners, the opening and closing of the front shield, etc., thus allowing the cooks to remain at a safety distance.

Said control unit emits and/or manages also acoustic and/or light signals intended to signal to the operators the various grilling stages and to warn them that the food is ready to be extracted.

Said control unit comprises several cooking cycles that can be used according to the type of food to be grilled.

The characteristics of the invention are illustrated in greater detail in the following description, with reference to the drawings that are attached hereto by way of nonlimiting example.

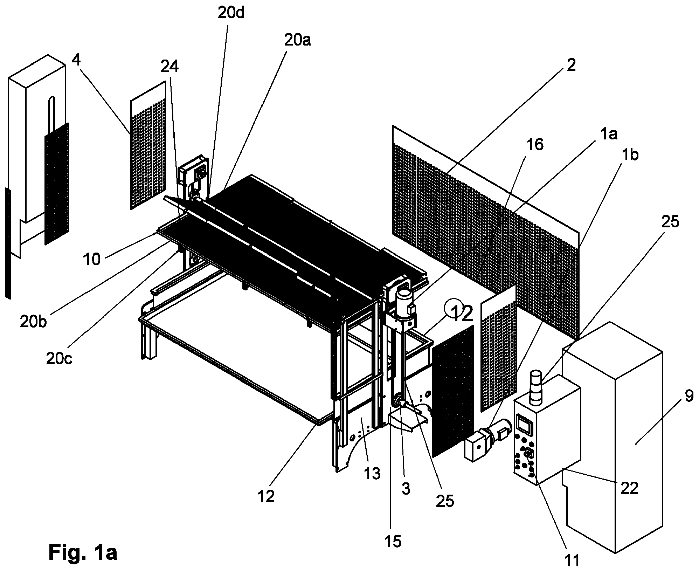

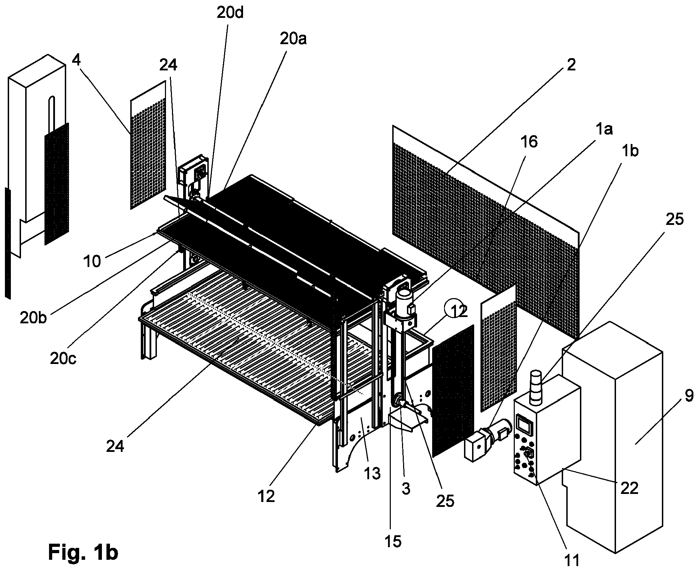

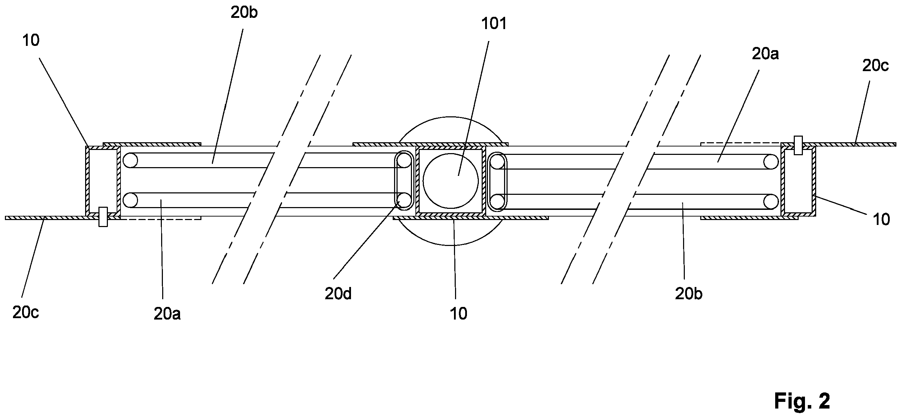

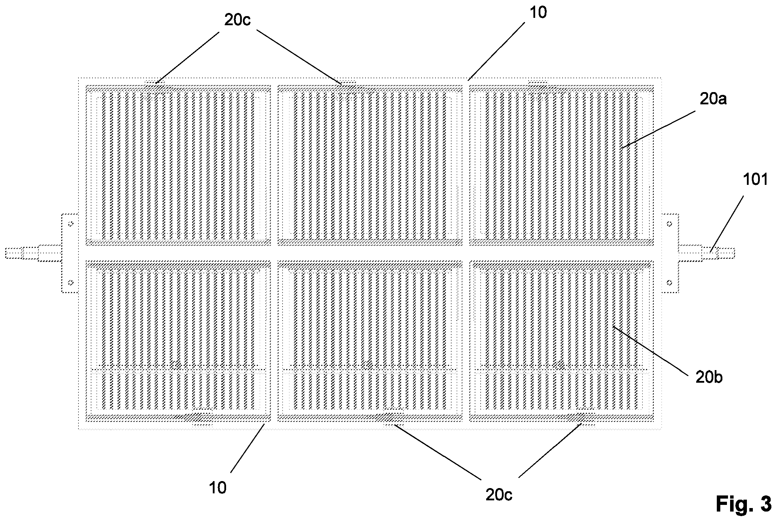

Figures 1a and 1b, 2, 3 show the grilling equipment in its main parts:
- grate-holding frame divided in eight sectors (10);
- first motor (1b) for the translation of the grate-holding frame (10) and second motor (1a) for the rotation of the same;
- vertical motion transmission unit (3);
- protective shield (2) located in the rear part of the grate-holding frame (10);
- uprights (15) for the vertical translation of the motor (1a) dedicated to the rotation of the grate-holding frame (10) with several double grates (20a, 20b);
- protective shields (4) located at the sides of the grilling area;
- drawer (9) suited to contain and protect the transmission members;
- double grates (20a) and (20b);
- upper grates (20b) suited to contain and hold the food and hinged to the first grate (20a);
- translating and rotating grate-holding frame (10) with double grates (20a) and (20b);
- emergency switch (11);
- element designed to contain the heat source (12), embers (Figure 1a) or gas plates (24) (Figure 1b);
- equipment supporting base (13);
- upright (15) for the grill translation chain;
- safety micro switch (16) positioned on the rear shield (2);
- PLC connection support;
- locking device (20c) for the double upper (20a) and lower (20b) grates that hold the food in position;
- upper grate (20a);
- hinges (20d) for the rotation of the double upper (20a) and lower (20b) grates;
- PLC control system;
- gas plates (24);
- grill translation chain (25).

More specifically, always in Figures (1a) and (1b) it is possible to observe that the equipment for grilling food comprises, among its main parts, two side supports (13) equipped with vertical elements or uprights (15) with supporting legs and a grill bearing shoulder, said two side supports being connected and made integral with each other by a drawer (ember-holding 12a, plate-holding 12b) in such a way as to obtain a stable structure.

Each of said side supports (13) comprises a guide for the sliding movement of the translation unit of the grate-holding frame (10) and of the end of the center shaft of the frame itself.

The first motor (1b) for the vertical translation of the grate-holding frame (10) is applied to the transmission unit (3), which provides for activating the chain (25) on which the translating support of the center shaft of the grate-holding frame (10) itself is fixed.

Said center shaft of the grill will be connected to the second motor (1a) which translates vertically together with the frame (10) with grates (20a, 20b) and provides for the 180° rotation of the frame itself.

Around the drawer (12) there are side shields (4) and rear shields (2) designed both to protect the grill from the wind and to prevent the operators from approaching the grill from the wrong side.

Said first grate (20a) and said second grates (20b) are hinged to each other by means of one or more hinges (20d) that allow the variation of the rotation axis of each grate with respect to the other, while special coupling and fixing devices (20c) allow the pair of grates to be constrained to the frame (10).

In this case the grate-holding frame comprises eight sectors, each suited to contain hinged pairs of grates (20a, 20b) that are independent of each other, in such a way that it is possible to open even one sector only, in which the food, owing to its characteristics, may have a cooking time different from that of the food positioned in the other sectors.

In addition to the main mechanical parts described above, the grilling equipment comprises also a unit for controlling and managing the cooking times and stages, provided with an emergency switch (11).

The operation of the grilling equipment includes the lowering of the grate-holding frame (10), the introduction of the food in the various sectors, the closing of the second grates (20b), following which the food is compressed and held in the correct position.

The grilling process includes several rotations of the grate-holding frame (10), in such a way that the food can be heated on both sides; more specifically, several intervals are preset for all the grill rotation and translation operations.

The grate-holding frame (10), with the pair of grates (20a, 20b) closed, is lifted in horizontal position by means of the first motor (1b) and reaches the upper position, where the second motor (1a) provides for its 180° rotation. Successively, the first motor (1b) moves the grill back to the optimal grilling position and this operation is repeated at regular intervals with preset duration and for the preset number of steps. The whole management of the grill movement is preset by the control unit (22), which provides for managing all the operations, allowing the cooks to remain at a safety distance.

At the end of each preset grilling cycle, an acoustic and/or light signal will be activated to warn the operators that the food is ready to be extracted. All or just some of the upper grates are opened, so that the food contained therein can be extracted. Successively, it will be possible to introduce other food and a new grilling cycle can be started.

Protection casings for the moving members are provided.

These are the schematic outlines which are sufficient for the expert in the art to carry out the invention, consequently on practical application variants may be developed which do not affect the substance of the innovative concept introduced herein. Therefore, with reference to the above description and the attached drawings, the following claims are expressed.

## Claims

1. Equipment for grilling food, comprising :
• at least two vertical uprights (15) equipped with guides for the vertical sliding movement of a grate-holding frame (10) supporting one or more pairs of grates (20a and 20b);
• said grate-holding frame (10), which is suited to translate in the vertical direction and to rotate preferably on its center axis;
• one or more pairs of grates (20a, 20b) hinged to each other, made integral with said grate-holding frame (10) and suited to be opened for the insertion of the food and closed to hold the food during rotation and grilling;
• a first motor (1b) designed to provide for the vertical translation of said pair/s of grates (20a, 20b) through a chain or other suitable means;
• < a second motor (1a) suited to rotate said grate-holding frame (10) and translating vertically along guides of said vertical uprights (15).>
• a control system (22) intended to provide for the cyclic translation and rotation of said grates;
• a heat source placed under said frame (10) and said grates (20a, 20b); **characterized in that** the equipment for grilling further comprises < - >

2. Grilling equipment according to claim 1, **characterized in that** it comprises one or more gas plates (24) serving as a heat source.

3. Grilling equipment according to claim 1, **characterized in that** it comprises one or more lower elements (12) suited to contain the embers serving as a heat source.

4. Grilling equipment according to the preceding claims, **characterized in that** said grate-holding frame (10) is divided in several sectors on which two or more pairs of grates (20a, 20b) can be rested and constrained.

5. Grilling equipment according to claim 1, **characterized in that** it comprises a PLC control system (22) suited to control the cyclic translation and rotation of said grate-holding frame (10) according to preset time intervals.

6. Grilling equipment according to the preceding claims, **characterized in that** said rotation hinges (20d) between said upper grates (20a) and said lower grates (20b) comprise two or more rotation points, thus making it possible to vary the distance of the second grates (20b) with respect to the first grates (20a).

7. Grilling equipment according to the preceding claims, **characterized in that** it comprises, as a protection element for the heat source, at least one rear shield (2) and possible side shields (4) and a possible door in the front part of said grill, designed to close the grill on each side after the insertion of the food.

8. Grilling equipment according to claim 5,
**characterized in that** it comprises a heat probe designed to control the temperature of the embers, *and wherein* said probe is connected to said PLC.

9. Grilling equipment according to the preceding claims, **characterized in that** it comprises two or more wheels at the base of said grill, which are suited to allow the translation of the latter.

10. Grilling equipment according to the preceding claims, **characterized in that** it comprises an emergency switch (11) to be used to stop any movement of the grill itself and/or to turn the gas off.

11. Grilling equipment according to the preceding claims, **characterized in that** it comprises light-emitting devices (25) intended to warn the operator that the equipment is working and to provide information regarding the cooking process.

12. Grilling equipment according to the preceding claims, **characterized in that** it comprises control devices that allow the complete rotation of the frame only when the latter is in the completely lifted position.

13. Grilling equipment according to the preceding claims, **characterized in that** it comprises a remote control or in any case any suitable wireless control, so that it is possible to set and/or control all the various grilling stages, including the start of the two motors, from a suitable distance.

14. Grilling equipment according to the preceding claims, **characterized in that** said grate-holding frame (10) can be replaced with a rotisserie spit in order to cook whole animals.

## Patentansprüche

1. Ausrüstung zum Grillen von Lebensmitteln, umfassend:
• mindestens zwei vertikale Säulen (15), die mit Führungen für die vertikale Gleitbewegung eines Rosthalterahmens (10) ausgestattet sind, der ein oder mehrere Paare von Rosten (20a und 20b) aufnimmt;
• den besagten Rosthalterahmen (10), der geeignet ist, sich in vertikaler Richtung zu verschieben und vorzugsweise um seine Mittelachse zu drehen;
• ein oder mehrere Paare von Rosten (20a, 20b), die angelenkt miteinander verbunden sind, die einstückig mit dem besagten Rosthalterahmen (10) ausgebildet sind und die geeignet sind, für das Einlegen der Lebensmittel geöffnet und geschlossen zu werden, um die Lebensmittel während der Drehung und des Grillens zu halten;
• einen ersten Motor (1b), der dazu bestimmt ist, die vertikale Verschiebung des/der besagten Paares/Paare von Rosten (20a, 20b) über eine Kette oder ein anderes geeignetes Mittel sicherzustellen;
• ein Steuersystem (22), das dazu bestimmt ist, die zyklische Verschiebung und Drehung der besagten Roste zu gewährleisten;
• eine Wärmequelle, die unter dem besagten Rosthalterahmen (10) und den besagten Rosten (20a, 20b) angeordnet ist,
**dadurch gekennzeichnet, dass** die Ausrüstung zum Grillen außerdem einen zweiten Motor (1a) umfasst, der geeignet ist, den besagten Rosthalterahmen (10) zu drehen und sich vertikal entlang der Führungen der besagten vertikalen Säulen (15) zu verschieben.

2. Ausrüstung zum Grillen nach Patentanspruch 1, **dadurch gekennzeichnet, dass** sie eine oder mehrere Gasplatten (24) umfasst, die als Wärmequelle dienen.

3. Ausrüstung zum Grillen nach Patentanspruch 1, **dadurch gekennzeichnet, dass** sie ein oder mehrere untere Elemente (12) umfasst, die geeignet sind, die als Wärmequelle dienende Glut aufzunehmen.

4. Ausrüstung zum Grillen nach den vorhergehenden Patentansprüchen, **dadurch gekennzeichnet, dass** der besagte Rosthalterahmen (10) in mehrere Sektoren unterteilt ist, auf denen zwei oder mehr Paare von Rosten (20a, 20b) aufliegen und eingespannt werden können.

5. Ausrüstung zum Grillen nach Patentanspruch 1, **dadurch gekennzeichnet, dass** sie ein SPS-Steuersystem (22) umfasst, das geeignet ist, die zyklische Verschiebung und Drehung des besagten Rosthalterahmens (10) gemäß voreingestellten Zeitintervallen zu steuern.

6. Ausrüstung zum Grillen nach den vorhergehenden Patentansprüchen, **dadurch gekennzeichnet, dass** die besagten Drehgelenke (20d) zwischen den besagten oberen Rosten (20a) und den besagten unteren Rosten (20b) zwei oder mehr Drehpunkte aufweisen, wodurch es möglich ist, den Abstand der zweiten Roste (20b) in Bezug auf die ersten Roste (20a) zu verändern.

7. Ausrüstung zum Grillen nach den vorhergehenden Patentansprüchen, **dadurch gekennzeichnet, dass** sie als Schutzelement für die Wärmequelle mindestens eine hintere Abschirmung (2) und eventuelle seitliche Abschirmungen (4) und eine eventuelle Tür im vorderen Teil des besagten Grills umfasst, die dazu bestimmt sind, den Grill auf jeder Seite nach dem Einlegen der Lebensmittel zu schließen.

8. Ausrüstung zum Grillen nach Patentanspruch 5, **dadurch gekennzeichnet, dass** sie eine Wärmesonde umfasst, die dazu bestimmt ist, die Temperatur der Glut zu kontrollieren, *und wobei* die besagte Sonde mit der SPS verbunden ist.

9. Ausrüstung zum Grillen nach den vorhergehenden Patentansprüchen, **dadurch gekennzeichnet, dass** sie zwei oder mehr Räder an der Basis des besagten Grills umfasst, die geeignet sind, die Verschiebung des Letzteren zu ermöglichen.

10. Ausrüstung zum Grillen nach den vorhergehenden Patentansprüchen, **dadurch gekennzeichnet, dass** sie einen Not-Aus-Schalter (11) umfasst, der dazu dient, jede Bewegung des Grills selbst zu stoppen und/oder das Gas abzuschalten.

11. Ausrüstung zum Grillen nach den vorhergehenden Patentansprüchen, **dadurch gekennzeichnet, dass** sie Leuchtvorrichtungen (25) umfasst, die dazu bestimmt sind, den Bediener zu warnen, dass das Gerät in Betrieb ist, und Informationen über den Garvorgang zu liefern.

12. Ausrüstung zum Grillen nach den vorhergehenden Patentansprüchen, **dadurch gekennzeichnet, dass** sie Steuervorrichtungen umfasst, die die vollständige Drehung des Rahmens nur dann erlauben, wenn sich dieser in der vollständig angehobenen Position befindet.

13. Ausrüstung zum Grillen nach den vorhergehenden Patentansprüchen, **dadurch gekennzeichnet, dass** sie eine Fernbedienung oder in jedem Fall eine geeignete drahtlose Steuerung umfasst, sodass es möglich ist, alle verschiedenen Grillstufen, einschließlich des Starts der beiden Motoren, aus einer geeigneten Entfernung einzustellen und/oder zu steuern.

14. Ausrüstung zum Grillen nach den vorhergehenden Patentansprüchen, **dadurch gekennzeichnet, dass** der besagte Rosthalterahmen (10) durch einen Drehspieß ersetzt werden kann, um ganze Tierkörper zu garen.

## Revendications

1. Appareil pour griller des aliments, comprenant :
• au moins deux montants verticaux (15) équipés de guides pour le mouvement de coulissement vertical d'un cadre de support de grille (10) supportant une ou plusieurs paires de grilles (20a et 20b) ;
• ledit cadre de support de grille (10), qui est adapté pour se déplacer par translation dans la direction verticale et pour tourner de préférence sur son axe central ;
• une ou plusieurs paires de grilles (20a, 20b) fixées l'une à l'autre, rendues solidaires dudit cadre de support de grille (10) et adaptées pour être ouvertes pour l'insertion de l'aliment et fermées pour maintenir l'aliment pendant la rotation et le grillage ;
• un premier moteur (1b) conçu pour assurer la translation verticale de ladite/desdites paire/s de grilles (20a, 20b) par l'intermédiaire d'une chaîne ou d'autres moyens appropriés ;
• un système de commande (22) destiné à assurer la translation et la rotation cycliques desdites grilles ;
• une source de chaleur placée sous ledit cadre (10) et lesdites grilles (20a, 20b),
**caractérisé en ce que** l'équipement pour griller comprend en outre un deuxième moteur (1a) indiqué pour faire tourner ledit cadre de support de grille (10) et se déplacer par translation verticalement le long de guides desdits montants verticaux (15).

2. Appareil de grillage selon la revendication 1, **caractérisé en ce qu'**il comprend une ou plusieurs plaques à gaz (24) servant de source de chaleur.

3. Équipement de grillage selon la revendication 1, **caractérisé en ce qu'**il comprend un ou plusieurs éléments inférieurs (12) adaptés pour contenir les braises servant de source de chaleur.

4. Appareil de grillage selon les revendications précédentes, **caractérisé en ce que** ledit cadre de support de grille (10) est divisé en plusieurs secteurs sur lesquels deux ou plusieurs paires de grilles (20a, 20b) peuvent être appuyées et bloquées.

5. Appareil de grillage selon la revendication 1, **caractérisé en ce qu'**il comprend un système de commande par PLC (22) adapté pour commander la translation et la rotation cycliques dudit cadre de support de grille (10) selon des intervalles de temps prédéfinis.

6. Appareil de grillage selon les revendications précédentes, **caractérisé en ce que** lesdites charnières de rotation (20d) se trouvant entre lesdites grilles supérieures (20a) et lesdites grilles inférieures (20b) comprennent deux ou plusieurs points de rotation, permettant ainsi de faire varier la distance des deuxièmes grilles (20b) par rapport aux premières grilles (20a).

7. Appareil de grillage selon les revendications précédentes, **caractérisé en ce qu'**il comprend, comme élément de protection de la source de chaleur, au moins un écran arrière (2) et d'éventuels écrans latéraux (4) et une porte éventuelle dans la partie avant de ladite grille, conçue pour fermer la grille de chaque côté après l'insertion de l'aliment.

8. Appareil de grillage selon la revendication 5, **caractérisé en ce qu'i**l comprend une sonde thermique destinée à contrôler la température des braises, *et où* ladite sonde est connectée audit PLC.

9. Appareil de grillage selon les revendications précédentes, **caractérisé en ce qu'**il comprend deux ou plusieurs roues à la base de ladite grille, qui sont adaptées pour permettre la translation de ce dernier.

10. Appareil de grillage selon les revendications précédentes, **caractérisé en ce qu'**il comprend un interrupteur d'urgence (11) à utiliser pour arrêter tout mouvement de la grille et/ou pour couper le gaz.

11. Appareil de grillage selon les revendications précédentes, **caractérisé en ce qu'**il comprend des dispositifs émetteurs de lumière (25) destinés à avertir l'opérateur que l'équipement fonctionne et à fournir des informations concernant le processus de cuisson.

12. Appareil de grillage selon les revendications précédentes, **caractérisé en ce qu'**il comprend des dispositifs de commande qui permettent la rotation complète du cadre uniquement lorsque celui-ci est en position complètement relevée.

13. Appareil de grillage selon les revendications précédentes, **caractérisé en ce qu'**il comprend une télécommande ou en tout cas toute commande sans fil appropriée, de sorte qu'il est possible de régler et/ou de contrôler toutes les différentes étapes de la grillage, y compris le démarrage des deux moteurs, à une distance appropriée.

14. Appareil de grillage selon les revendications précédentes, **caractérisé en ce que** ledit cadre de support de grille (10) peut être remplacé par une broche de rôtisserie afin de cuire des animaux entiers.
